# EUROPÄISCHE PATENTSCHRIFT

(11) **EP 3 900 297 B1**
(45) Veröffentlichungstag und Bekanntmachung des Hinweises auf die Patenterteilung: **21.12.2022**
(21) Anmeldenummer: 20704438.9
(22) Anmeldetag: 31.01.2020
(51) Int. Cl.: H04L 9/40, H04L 9/08

(54) **VERFAHREN UND SYSTEM ZUM ÜBERTRAGEN VON DATEN IN EINEM NETZWERK**
METHOD AND SYSTEM FOR TRANSFER OF DATA IN A NETWORK
PROCÉDÉ ET SYSTÈME DE TRANSFERT DE DONNÉES DANS UN RÉSEAU

(30) Priorität: 14.02.2019 EP 19157151
(43) Veröffentlichungstag der Anmeldung: 27.10.2021
(73) Patentinhaber: Siemens Aktiengesellschaft, 80333 München (DE)
(72) Erfinder: FALK, Rainer, 85586 Poing (DE); FISCHER, Kai, 85598 Baldham (DE); FRIES, Steffen, 85598 Baldham (DE); FURCH, Andreas, 85354 Freising (DE); HEINTEL, Markus, 81377 München (DE); PAPAGUDI SUBRAHMANYAM, Niranjana, 85540 Haar (DE); SEL, Tolga, 81379 München (DE)
(86) Internationale Anmeldenummer: PCT/EP2020/052420
(87) Internationale Veröffentlichungsnummer: WO 2020/164927

(56) Entgegenhaltungen:
- WO-A1-2006/128747
- WO-A2-2006/081122

## Beschreibung

Die vorliegende Erfindung betrifft ein Verfahren sowie ein Computerprogrammprodukt zum Übertragen von Daten in einem Netzwerk, insbesondere die Übertragung von Daten in einem Netzwerk zwischen einer ersten Kommunikations-Vorrichtung und einer zweiten Kommunikations-Vorrichtung. Des Weiteren betrifft die vorliegende Erfindung ein System zum Übertragen von Daten in einem Netzwerk.

Zur Authentifikation einer ersten Kommunikations-Vorrichtung an einer zweiten Kommunikations-Vorrichtung und insbesondere zum Sichern von Kommunikationsverbindungen zur Datenübertragung werden entweder asymmetrische, symmetrische oder kombinierte Verschlüsselungsverfahren eingesetzt. Beispielsweise erfolgt die Authentifikation auf Basis von asymmetrischem Schlüsselmaterial und X.509-Zertifikaten.

Handelt es sich bei der zu authentifizierenden Kommunikations-Vorrichtung, wie beispielsweise der ersten Kommunikations-Vorrichtung, um ein Gerät mit sehr eingeschränkten Ressourcen hinsichtlich Energieverbrauch, CPU-Performance (CPU; "Central Processing Unit") und Speicher ist eine asymmetrische Authentifikation nicht in einer akzeptablen Zeitdauer durchführbar.

Geräte mit diesen Randbedingungen sind häufig in IoT- (IoT; "Internet-of-Things") oder in Automatisierungssystemen (zum Beispiel Sensoren) anzutreffen. In diesen Fällen erfolgt die Authentifikation insbesondere auf Basis symmetrischer Authentifikationsprotokolle und geteilter symmetrischer Schlüssel.

Um eine sichere Kommunikation zwischen den einzelnen IoT-Geräten des Systems zu gewährleisten, erhöht sich jedoch mit der Anzahl der beteiligten IoT-Geräte (Kommunikations-Vorrichtungen) der Aufwand für das Management von symmetrischen Authentifikationsprotokollen und symmetrischen Schlüsseln für die jeweiligen einzelnen IoT-Geräte.

Die WO 2006/081122 A2 offenbart ein Verfahren und ein System zur Ableitung eines Schlüssels zum Verschlüsseln unter Verwendung einer gemeinsamen Zufälligkeit, die nicht von anderen geteilt wird (JRNSO). Kommunikations-Einheiten erzeugen JRNSO-Bits aus einer Kanalimpulsantwort (CIR)-Schätzung und die JRNSO-Bits werden zur Erzeugung eines Schlüssels zum Verschlüsseln verwendet. Der Authentifizierungstyp kann ein IEEE 802.1x-System oder ein vorinstalliertes Schlüsselsystem sein. In einem IEEE 802.1x-System kann mittels der JRNSO-Bits ein Master-Schlüssel, ein paarweiser Master-Schlüssel oder ein paarweiser transienter Schlüssel erzeugt werden. Der Schlüssel zum Verschlüsseln kann unter Verwendung eines Diffie-Hellman-Schlüsselableitungsalgorithmus erzeugt werden.

Vor diesem Hintergrund besteht eine Aufgabe der vorliegenden Erfindung darin, die Übertragung von Daten in einem Netzwerk zu verbessern.

Gemäß einem ersten Aspekt wird ein Verfahren zum Übertragen von Daten in einem Netzwerk umfassend eine Mehrzahl M von Kommunikations-Vorrichtungen, mit M ≥ 2, wobei die Mehrzahl M eine erste Kommunikations-Vorrichtung und eine zweite Kommunikations-Vorrichtung umfasst, welche über einen Netzwerkverbindungsabschnitt zum Übertragen von Daten verbunden sind, vorgeschlagen. Das Verfahren weist die folgenden Schritte auf:
a) Ermitteln einer Laufzeiteigenschaft von zwischen der ersten Kommunikations-Vorrichtung und der zweiten Kommunikations-Vorrichtung über den Netzwerkverbindungsabschnitt übertragenen Daten jeweils durch die erste Kommunikations-Vorrichtung und die zweite Kommunikations-Vorrichtung,
b) Ableiten eines Geheimnisses jeweils durch die erste Kommunikations-Vorrichtung und die zweite Kommunikations-Vorrichtung unter Verwendung der jeweiligen ermittelten Laufzeiteigenschaft, und
c) Übertragen einer mittels des abgeleiteten Geheimnisses geschützten Nachricht zwischen der ersten und der zweiten Kommunikations-Vorrichtung.

Bei dem vorliegenden Verfahren wird in dem ersten Schritt a) jeweils eine Laufzeiteigenschaft von zwischen der ersten und der zweiten Kommunikations-Vorrichtung über den Netzwerkverbindungsabschnitt übertragenen Daten ermittelt.

Mittels der jeweils ermittelten Laufzeiteigenschaft wird dann in dem zweiten Schritt b) jeweils ein identisches Geheimnis abgeleitet. Anschließend ist es in dem dritten Schritt c) möglich, die zu übertragenen Nachrichten mittels des identischen abgeleiteten Geheimnisses zu schützen.

Dies hat den technischen Effekt, dass die erste und die zweite Kommunikations-Vorrichtung ein gemeinsames (identisches) Geheimnis aus der jeweiligen ermittelten Laufzeiteigenschaft einzeln ableiten können, ohne vorab eine geschützte Kommunikationsbeziehung gehabt zu haben oder vorab ein Geheimnis ausgetauscht zu haben.

Das hat den Vorteil, dass die Sicherheit bei der Übertragung von Nachrichten erhöht wird, während der technische Aufwand zur Bereitstellung dieser Sicherheit verringert wird. Ferner wird durch das vorliegende Verfahren ein "Man-in-the-Middle-Angriff" erschwert. Ein weiterer Vorteil ist, dass das vorliegende Verfahren keine Eingabe eines Benutzers erfordert und automatisiert durchgeführt werden kann.

Zudem wird das Übertragen von geschützten Nachrichten zwischen der ersten und der zweiten Kommunikations-Vorrichtung nur erfolgreich eingerichtet, wenn die jeweils ermittelten Laufzeiteigenschaften der ersten und der zweiten Kommunikations-Vorrichtung identisch sind.

Das Netzwerk umfasst insbesondere eine dritte, eine vierte oder weitere Kommunikations-Vorrichtung. Unter dem Netzwerk kann auch ein Kommunikationsnetz oder ein Rechnernetz verstanden werden. Vorzugsweise ist das Netzwerk eine Einrichtung oder eine Infrastruktur, in welcher zumindest eine erste und eine zweite Kommunikations-Vorrichtung Daten oder Informationen austauschen. Hierzu wird insbesondere der Netzwerkverbindungsabschnitt zwischen der ersten und der zweiten Kommunikations-Vorrichtung bereitgestellt.

Die Kommunikations-Vorrichtung ist vorzugsweise eine Vorrichtung, die dazu eingerichtet ist, mit einer anderen Kommunikations-Vorrichtung zu kommunizieren und Daten auszutauschen. Die Kommunikations-Vorrichtung ist insbesondere ein Gerät, welches eine Schnittstelle für einen Kommunikationsaufbau, eine Kommunikationsverbindung und einen Kommunikationsdatenaustausch mit einem anderen Gerät aufweist. Insbesondere handelt es sich bei der Kommunikations-Vorrichtung um ein eingebettetes Gerät.

Der Netzwerkverbindungsabschnitt ist vorzugsweise ein Kommunikationskanal, ein Kanal, ein Informationskanal, ein Übertragungskanal oder ein Übertragungsweg zum Übertragen von Daten zwischen zumindest der ersten und der zweiten Kommunikations-Vorrichtung. Beispielsweise sind zwischen der ersten und der zweiten Kommunikations-Vorrichtung mehrere Netzwerkverbindungsabschnitte hintereinander und/oder parallel zueinander angeordnet.

Die Laufzeiteigenschaft ist insbesondere eine Netzwerkeigenschaft eines Netzwerkprotokolls. Zur Einteilung und Strukturierung des Netzwerkprotokolls, wie beispielsweise TCP ("Transmission Control Protocol"), UDP ("User Data Protocol"), TLS ("Transport Layer Security Protocol"), DTLS ("Datagram Transport Layer Security") und/oder HTTP ("Hypertext Transfer Protocol"), wird vorzugsweise das ISO/OSI-Schichtenmodell verwendet. Insbesondere wird die Netzwerkeigenschaft eines Netzwerkprotokolls in der Schicht 2 (Sicherungsschicht), in der Schicht 3 (Vermittlungsschicht) oder in der Schicht 4 (Transportschicht) ermittelt. Auch können Netzwerkeigenschaften eines Netzwerkprotokolls aus den Schichten 5 bis 7 des ISO/OSI-Schichtenmodells oder für das Maschinezu-Maschine-Kommunikation verwendete Protokoll MQTT ("Message Queuing Telemetry Transport") ermittelt werden. Die Laufzeiteigenschaft kann bei einem bestimmten Netzwerkverbindungsabschnitt für verschiedene Netzwerkprotokolle unterschiedlich sein.

Das Geheimnis ist insbesondere ein kryptografischer Schlüssel und hierbei vorzugsweise ein symmetrischer kryptografischer Schlüssel. Das Geheimnis wird vorzugsweise für den Schutz der Kommunikation, also für eine verschlüsselte und/oder integritätsgeschützte oder authentifizierte Nachrichtenübertragung zwischen der ersten Kommunikations-Vorrichtung und der zweiten Kommunikations-Vorrichtung, verwendet. Dies bedeutet, dass der symmetrische Schlüssel vorzugsweise zum Ver- und Entschlüsseln und/oder zum Schutz einer Integrität oder einer Authentizität von Nachrichten durch die erste und zweite Kommunikations-Vorrichtung des Netzwerks verwendet wird. Das Geheimnis ist insbesondere identisch für die erste und die zweite Kommunikations-Vorrichtung. Hierbei kann auch von einem gemeinsamen abgeleiteten Geheimnis gesprochen werden.

Bei der geschützten Nachricht handelt es sich vorzugsweise um eine geschützte Nachricht, welche Steuerdaten und/oder Überwachungsdaten umfasst, welche von der ersten Kommunikations-Vorrichtung an die zweite Kommunikations-Vorrichtung, oder umgekehrt, in dem Netzwerk geschützt übertragen wird. Weiterhin wird vorliegend unter einer Nachricht insbesondere ein digitaler Datensatz, beispielsweise eine Folge von Nullen und Einsen, die auch als Bits bezeichnet werden, mit einer bestimmten Länge verstanden.

Insbesondere ist bei dem Ermitteln in Schritt a) die ermittelte Laufzeiteigenschaft als ein Mittelwert, als ein zeitlicher Verlauf und/oder als ein Extremwert ausgebildet.

Vorzugsweise wird in dem Schritt b) ein Geheimnis jeweils durch die erste Kommunikations-Vorrichtung und die zweite Kommunikations-Vorrichtung unter Verwendung der jeweiligen ermittelten Laufzeiteigenschaft der ersten Kommunikations-Vorrichtung und der zweiten Kommunikations-Vorrichtung abgeleitet.

Die Nachricht wird beispielsweise kryptografisch geschützt und dann übertragen. Unter einer kryptografisch geschützten Nachricht ist insbesondere der Schutz der Vertraulichkeit und/oder der Schutz der Authentizität oder der Integrität der Nachricht und/oder Teilen der Nachricht zu verstehen. Der kryptografische Schutz kann dabei durch das abgeleitete Geheimnis und durch ein Sicherheitsprotokoll, wie beispielsweise TLS, SSL ("Secure Socket Layer"), SSH ("Secure Shell") und/oder IPSec ("Internet Protocol Security"), realisiert werden.

Vorzugsweise wird das Übertragen von geschützten Nachrichten zwischen der ersten und der zweiten Kommunikations-Vorrichtung bi- oder unidirektional durchgeführt.

Gemäß des ersten Aspekts ist der Netzwerkverbindungsabschnitt als ein drahtgebundener Netzwerkverbindungsabschnitt oder als ein optischer Netzwerkverbindungsabschnitt ausgebildet.

Unter einem drahtgebundenen Netzwerkverbindungsabschnitt wird insbesondere ein Netzwerkverbindungsabschnitt verstanden, bei welchem das Medium zum Übertragen von Daten aus metallischen Materialen, wie vorzugsweise Kupfer oder Aluminium, ausgebildet ist.

Unter einem optischen Netzwerkverbindungsabschnitt wird beispielsweise ein Netzwerkverbindungsabschnitt verstanden, bei welchem das Medium zum Übertragen der Daten Licht ist. Hierbei werden insbesondere aus Lichtleitern ausgebildete Lichtwellenleiter und Lichtleitkabel verwendet.

Weiterhin kann, vorzugsweise in einem Fall, in welchem mehrere Netzwerkverbindungsabschnitte zwischen der ersten und der zweiten Kommunikations-Vorrichtung hintereinandergeschaltet sind, zumindest ein Netzwerkverbindungsabschnitt drahtgebunden und zumindest ein anderer Netzwerkverbindungsabschnitt optisch ausgebildet sein. Es können auch mehrere Netzwerkverbindungsabschnitte hintereinander jeweils drahtgebunden oder jeweils optisch ausgebildet sein.

Gemäß einer weiteren Ausführungsform erfolgt das Ermitteln der Laufzeiteigenschaft zu einem Zeitpunkt eines Verbindungsaufbaus zwischen der ersten Kommunikations-Vorrichtung und der zweiten Kommunikations-Vorrichtung.

Der Zeitpunkt des Verbindungsaufbaus wird insbesondere auch als ein Zeitpunkt eines Initialisierens einer Kommunikationsverbindung zwischen der ersten und zweiten Kommunikations-Vorrichtung bezeichnet.

Vorzugsweise werden Richtlinien (Policies) für die Bestimmung der Laufzeiteigenschaft zwischen der ersten und der zweiten Kommunikations-Vorrichtung beim Verbindungsaufbau dynamisch ausgehandelt.

Gemäß einer weiteren Ausführungsform wird in dem Schritt b) das Geheimnis jeweils durch die erste Kommunikations-Vorrichtung und die zweite Kommunikations-Vorrichtung mittels einer eine Anzahl von Ableitungsparametern verwendeten Schlüsselableitungsfunktion abgeleitet, wobei die Ableitungsparameter zumindest die jeweilige ermittelte Laufzeiteigenschaft aufweisen.

Weiterhin kann das jeweilige Ableiten des Geheimnisses an eine bestimmte Bedingung geknüpft sein. Hierbei wird vorzugsweise ein Geheimnis nur abgeleitet, beispielsweise mittels Diffie-Hellman-Schlüsselaustauschs, wenn die jeweils ermittelte Laufzeiteigenschaft unter oder über einem bestimmten Schwellwert liegt.

Gemäß einer weiteren Ausführungsform umfassen die Ableitungsparameter ferner jeweils vorab konfigurierte Daten und/oder jeweils dynamische Daten.

Die dynamischen Daten werden insbesondere bei dem Verbindungsaufbau zwischen der ersten und zweiten Kommunikations-Vorrichtung gegenseitig ausgetauscht und können dann als Ableitungsparameter verwendet werden.

Gemäß einer weiteren Ausführungsform umfasst die jeweilige ermittelte Laufzeiteigenschaft eine erste Zeitinformation und eine zweite Zeitinformation, wobei eine Konkatenation der ersten und zweiten Zeitinformation, eine Differenz der ersten und zweiten Zeitinformation, bestimmte Daten der ersten und zweiten Zeitinformation oder Schlüsselbits, die in Abhängigkeit der ersten und zweiten Zeitinformation generiert werden, als die Ableitungsparameter in der Schlüsselableitungsfunktion verwendet werden.

Bei der ersten Zeitinformation handelt es sich insbesondere um eine Master Clock der ersten und/oder der zweiten Kommunikations-Vorrichtung während es sich bei der zweiten Zeitinformation vorzugsweise um eine Slave Clock der ersten und/oder der zweiten Kommunikations-Vorrichtung handelt. Die erste Zeitinformation als auch die zweite Zeitinformation sind beispielsweise jeweils ein Zeitpunkt, wie eine bestimmte Uhrzeit einer Kommunikations-Vorrichtung und/oder ein von der ersten Kommunikations-Vorrichtung zu der zweiten Kommunikations-Vorrichtung - oder umgekehrt - übertragener Zeitpunkt.

Bei den bestimmten Daten der ersten und zweiten Zeitinformation handelt es sich vorzugsweise um bestimmte Teile, welche kaum vorhersagbar sind, wie beispielsweise ms-Anteile (Millisekunden-Anteile) der ersten und zweiten Zeitinformation.

Gemäß einer weiteren Ausführungsform sind die vorab konfigurierten Daten als feste Labels, als Masterschlüssel und/oder als weitere vorab konfigurierte Ableitungsinformationen ausgebildet.

Gemäß einer weiteren Ausführungsform sind die dynamischen Daten als Geräteadressen, als Nonces und/oder als Checksummen von über den Netzwerkverbindungsabschnitt ausgetauschten Nachrichten ausgebildet.

Gemäß einer weiteren Ausführungsform wird in dem Schritt b) das Geheimnis jeweils durch die erste Kommunikations-Vorrichtung und die zweite Kommunikations-Vorrichtung mittels einer eine Anzahl von Schlüsselgenerierungsparametern verwendenden Schlüsselgenerierungsfunktion generiert, wobei die Schlüsselgenerierungsparameter zumindest die jeweilige ermittelte Laufzeiteigenschaft aufweisen.

Gemäß einer weiteren Ausführungsform wird für jeden aus einer Mehrzahl N von redundanten Netzwerkverbindungsabschnitten zwischen der ersten und der zweiten Kommunikations-Vorrichtung eine Laufzeiteigenschaft von zwischen der ersten und der zweiten Kommunikations-Vorrichtung über den jeweiligen redundanten Netzwerkverbindungsabschnitt aus der Mehrzahl N von redundanten Netzwerkabschnitten übertragenen Daten durch die erste und die zweite Kommunikations-Vorrichtung ermittelt, mit N ≥ 2, wobei die jeweilige ermittelte Laufzeiteigenschaft als Teil der Ableitungsparameter in der Schlüsselableitungsfunktion verwendet wird.

Gemäß einer weiteren Ausführungsform werden für jeden aus der Mehrzahl N von redundanten Netzwerkverbindungsabschnitten zwischen der ersten und der zweiten Kommunikations-Vorrichtung mehrere Laufzeiteigenschaften von zwischen der ersten und der zweiten Kommunikations-Vorrichtung über den jeweiligen redundanten Netzwerkverbindungsabschnitt aus der Mehrzahl N von redundanten Netzwerkabschnitten übertragenen Daten durch die erste und die zweite Kommunikations-Vorrichtung ermittelt, wobei die jeweiligen ermittelten mehreren Laufzeiteigenschaften als Teil der Ableitungsparameter in der Schlüsselableitungsfunktion verwendet werden.

Insbesondere sind redundante Netzwerkverbindungsabschnitte in zeitsensitiven Umgebungen, wie gemäß einem TSN IEEE 802.1Q Standard, ausgebildet. Hierbei können vorzugsweise mittels der ersten und der zweiten Kommunikations-Vorrichtung mehrere Laufzeiteigenschaften von zwischen der ersten und der zweiten Kommunikations-Vorrichtung über einen redundanten Netzwerkverbindungsabschnitt übertragenen Daten ermittelt werden, welche als Ableitungsparameter in der Schlüsselableitungsfunktion verwenden werden.

Dies hat den Vorteil, dass Netzwerkkomponenten exklusive der ersten und der zweiten Kommunikations-Vorrichtung in dem Netzwerk nur einen Netzwerkverbindungsabschnitt der übertragenen Nachrichten beobachten können und somit nicht den vollständigen Satz an Ableitungsparametern für die Schlüsselableitungsfunktion kennen.

Gemäß einer weiteren Ausführungsform ist die jeweilige ermittelte Laufzeiteigenschaft als Latenz ausgebildet.

Unter Latenz wird insbesondere eine Übertragungszeit eines Datenpakets bei der Übertragung zwischen der ersten und der zweiten Kommunikations-Vorrichtung verstanden.

In dieser Ausführungsform wird insbesondere jeweils die Latenz von zwischen der ersten und der zweiten Kommunikations-Vorrichtung über den Netzwerkverbindungsabschnitt übertragenen Daten ermittelt und als Ableitungsparameter in der Schlüsselableitungsfunktion verwendet. Die Latenz kann vorzugsweise als Delay, Verzögerung oder als Netzwerklatenz bezeichnet werden.

Um die Latenz zu ermitteln, umfassen die erste und die zweite Kommunikations-Vorrichtung jeweils eine Komponente, mittels welcher es ermöglicht wird, die Latenz zu der jeweiligen anderen Kommunikations-Vorrichtung zu bestimmen. Dies hat den Vorteil, dass verhindert wird, dass ein Angreifer aus den übertragenden Daten auf die ermittelte Latenz zurück schließen kann.

Um die Latenz (Laufzeiteigenschaft) von übertragenen Daten zwischen der ersten und der zweiten Kommunikations-Vorrichtung zu ermitteln, wird insbesondere ein Zeitsynchronisierungsprotokoll, wie das PTP ("Precision Time Protocol"), verwendet.

Hierbei weisen die erste und die zweite Kommunikations-Vorrichtung eine Funktion PTP-Master Clock als auch eine Funktion PTP-Slave Clock auf. Zwei Kommunikations-Vorrichtungen, wie die erste und die zweite Kommunikations-Vorrichtung, die miteinander einen gemeinsamen symmetrischen kryptografischen Schlüssel ableiten möchten, legen hierzu beim Verbindungsaufbau jeweils eine lokale Zeit fest, welche vorzugsweise zufällig gewählt wird und nur für die Schlüsselableitung oder Schlüsselgenerierung gültig ist.

In einem weiteren Schritt synchronisiert sich jeweils beispielsweise die Slave-Clock der einen, beispielsweise der ersten Kommunikations-Vorrichtung, auf die Zeit der Master-Clock der anderen, beispielsweise der zweiten Kommunikations-Vorrichtung, indem die Latenz bestimmt wird.

Bei dieser Synchronisation werden vorzugsweise die Differenz der lokalen Zeiten, also die Differenz der jeweiligen Master Clocks der ersten und der zweiten Kommunikations-Vorrichtung als auch die Latenz des Netzwerks verwendet, wobei in vorteilhafter Weise ein möglicher Angreifer auf dem Netzwerkverbindungsabschnitt zwischen der ersten und der zweiten Kommunikations-Vorrichtung nicht einfach die Latenz des Netzwerks mitlesen oder berechnen kann.

Nach einer erfolgreichen Synchronisation verfügen die erste und die zweite Kommunikations-Vorrichtung insbesondere über zwei Zeitinformationen, zum einen die jeweils eigene lokal festgelegte Zeit (die erste Zeitinformation, die Master Clock) und zum anderen die synchronisierte Zeit der jeweils anderen Kommunikations-Vorrichtung (die zweite Zeitinformation, die Slave Clock).

Anschließend wird beispielsweise aus den Zeitinformationen ein gemeinsamer symmetrischer kryptografischer Schlüssel abgeleitet, welcher dann im Anschluss zum Schutz von zwischen der ersten und der zweiten Kommunikations-Vorrichtung zu übertragenen Nachrichten verwendet wird. Insbesondere wird für jeden Verbindungsaufbau mit einer weiteren Kommunikations-Vorrichtung eine neue lokale Zeit als eine Basiszeit festgelegt.

Bei der ersten Zeitinformation handelt es sich vorzugsweise um eine Master Clock der ersten und/oder der zweiten Kommunikations-Vorrichtung, während es sich bei der zweiten Zeitinformation um eine Slave Clock der ersten und/oder der zweiten Kommunikations-Vorrichtung handelt.

Bei der Verwendung von mehreren, redundanten Netzwerkverbindungsabschnitten kann die Synchronisation der Master und Slave Clock für jeden Netzwerkverbindungsabschnitt separat durchgeführt werden und insbesondere alle synchronisierten Zeitinformationen der einzelnen Netzwerkverbindungsabschnitte der mehreren redundanten Netzwerkverbindungsabschnitte können in der Schlüsselableitungsfunktion als Ableitungsparameter verwendet werden.

Weiterhin kann die ermittelte Laufzeiteigenschaft als Durchsatz oder Jitter ausgebildet sein.

Bei dem Durchsatz handelt es sich vorzugsweise um eine Anzahl von Bits, welche pro festgelegte Zeiteinheit in einem Netzwerkverbindungsabschnitt zwischen der ersten und der zweiten Kommunikations-Vorrichtung übertragen werden.

Unter Jitter wird beispielsweise ein zeitlicher Abstand bei einem Eintreffen von Datenpaketen oder eine Regelmäßigkeit beim Eintreffen von Datenpaketen bei der Übertragung von Datenpaketen zwischen der ersten und der zweiten Kommunikations-Vorrichtung über den Netzwerkverbindungsabschnitt verstanden.

Gemäß einer weiteren Ausführungsform wird die Latenz beim Übertragen einer Nachricht zwischen der ersten und der zweiten Kommunikations-Vorrichtung unter Verwendung einer in der ersten und/oder zweiten Kommunikations-Vorrichtung angeordneten Einrichtung manipuliert.

Hierbei weisen insbesondere die zwei Kommunikations-Vorrichtungen jeweils eine weitere Komponente auf, mittels welcher die Latenz beim Senden und/oder Empfangen der übertragenen Nachrichten beeinflusst oder manipuliert wird. Das Beeinflussen oder Manipulieren umfasst beispielsweise ein deterministisches Verzögern beim Senden von Nachrichten.

Gemäß einer weiteren Ausführungsform wird beim Ermitteln der Latenz jeweils durch die erste und die zweite Kommunikations-Vorrichtung die Latenz des Netzwerkverbindungsabschnitts zwischen der ersten und der zweiten Kommunikations-Vorrichtung mittels eines Generators spezifisch für den Netzwerkverbindungsabschnitt erzeugt.

Vorzugsweise umfasst das Netzwerk eine weitere Komponente, welche als ein Netzwerk-Generator ausgebildet ist. Der Netzwerk-Generator ist insbesondere dazu eingerichtet, spezifisch für den Netzwerkverbindungsabschnitt zumindest eine Latenz zwischen der ersten und der zweiten Kommunikations-Vorrichtung zu erzeugen. Der Netzwerk-Generator ist vorzugsweise als ein Teil eines Switches oder eines Routers ausgebildet.

Gemäß einer weiteren Ausführungsform bestätigt insbesondere die erste Kommunikations-Vorrichtung der zweiten Kommunikations-Vorrichtung kryptografisch verschlüsselt die von der ersten Kommunikations-Vorrichtung ermittelte Laufzeiteigenschaft.

Ein kryptografisch verschlüsseltes Bestätigen umfasst insbesondere das kryptografisch verschlüsselte Bestätigen mittels eines Sitzungsschlüssels, welcher unauthentisiert oder einseitig authentisiert im Kontext einer Sitzung eingerichtet wird. Vorzugsweise prüft die zweite Kommunikations-Vorrichtung anschließend die von der ersten Kommunikations-Vorrichtung ermittelte und bestätigte Laufzeiteigenschaft auf Konsistenz mit der selbst ermittelten Laufzeiteigenschaft. Dies kann insbesondere einseitig oder beidseitig erfolgen.

Gemäß einer weiteren Ausführungsform wird eine berechnete Prüfsumme der im Kontext der Sitzung übertragenen Nachrichten mit in die Bestätigung aufgenommen.

Die Prüfsumme wird beispielsweise lokal bei der ersten und der zweiten Kommunikations-Vorrichtung durch Hashen der zu sendenden und/oder zu empfangenen Nachricht gebildet. Vorzugsweise wird mittels der berechneten Prüfsumme eine Hashkette gebildet. Weiterhin kann die berechnete Prüfsumme insbesondere entweder explizit in der Bestätigung enthalten sein oder auch zum kryptographischen Verschlüsseln der Bestätigung, wie mittels eines HMAC ("Keyed-Hash Message Authentifikation Code"), genutzt werden.

Gemäß einer weiteren Ausführungsform wird anstatt der lokal festgelegten Zeit nur die gemessene Latenz zwischen der ersten und der zweiten Kommunikations-Vorrichtung ermittelt.

Dies erfolgt beispielsweise mittels ICMP ("Internet Control Message Protocol") Ping.

Gemäß einem zweiten Aspekt wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird ein System zum Übertragen von Daten in einem Netzwerk, umfassend eine Mehrzahl M von Kommunikations-Vorrichtungen, mit M ≥ 2, wobei die Mehrzahl M eine erste Kommunikations-Vorrichtung und eine zweite Kommunikations-Vorrichtung umfasst, welche über einen Netzwerkverbindungsabschnitt zum Übertragen von Daten verbunden sind, vorgeschlagen. Die erste Kommunikations-Vorrichtung und die zweite Kommunikations-Vorrichtung umfassen jeweils:
eine Ermittlungs-Einheit zum Ermitteln einer Laufzeiteigenschaft von zwischen der ersten Kommunikations-Vorrichtung und der zweiten Kommunikations-Vorrichtung über den Netzwerkverbindungsabschnitt übertragenen Daten,
eine Ableitungs-Einheit zum Ableiten eines Geheimnisses unter Verwendung der jeweiligen ermittelten Laufzeiteigenschaft, und
eine Übertragungs-Einheit zum Übertragen einer mittels des abgeleiteten Geheimnisses geschützten Nachricht zwischen der ersten und der zweiten Kommunikations-Vorrichtung.

Die jeweilige Einheit, zum Beispiel die Ermittlungs-Einheit oder die Ableitungs-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das vorgeschlagene Verfahren beschriebenen Ausführungsformen und Merkmale gelten für das vorgeschlagene System entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Ablaufdiagramm eines ersten Ausführungsbeispiels eines Verfahrens zum Übertragen von Daten in einem Netzwerk;
- Fig. 2: zeigt ein schematisches Ablaufdiagramm eines zweiten Ausführungsbeispiels eines Verfahrens zum Übertragen von Daten in einem Netzwerk; und
- Fig. 3: zeigt ein schematisches Blockdiagramm eines Ausführungsbeispiel eines Systems zum Übertragen von Daten in einem Netzwerk.

In den Figuren sind gleiche oder funktionsgleiche Elemente mit denselben Bezugszeichen versehen worden, sofern nichts anderes angegeben ist.

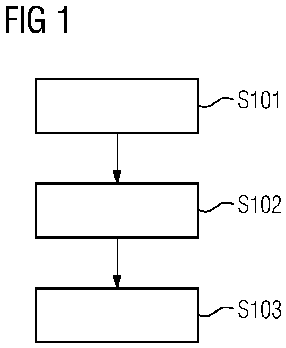

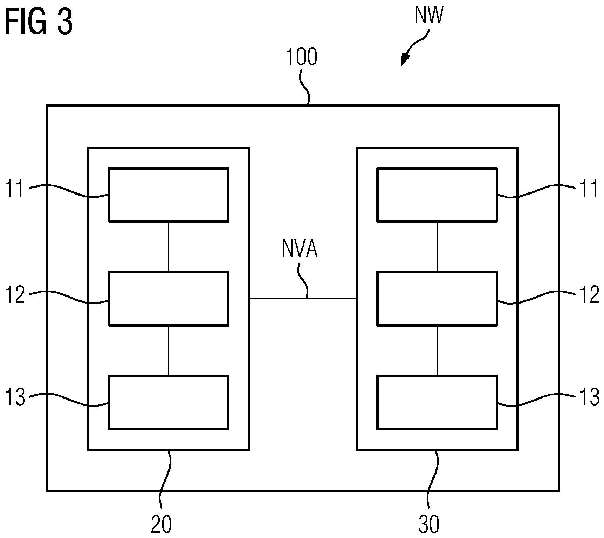

Fig. 1 zeigt ein schematisches Ablaufdiagramm eines ersten Ausführungsbeispiels eines Verfahrens zum Übertragen von Daten in einem Netzwerk NW wie es insbesondere in Fig. 3 dargestellt ist. Das Netzwerk NW umfasst eine Mehrzahl M von Kommunikations-Vorrichtungen, mit M ≥ 2. Die Mehrzahl M umfasst eine erste Kommunikations-Vorrichtung 20 und eine zweite Kommunikations-Vorrichtung 30, welche über einen Netzwerkverbindungsabschnitt NVA des Netzwerkes NW zum Übertragen von Daten verbunden sind.

Das erste Ausführungsbeispiel in Fig. 1 umfasst die Verfahrensschritte S101, S102 und S103:
In einem ersten Schritt S101 wird eine Laufzeiteigenschaft von zwischen der ersten Kommunikations-Vorrichtung 20 und der zweiten Kommunikations-Vorrichtung 30 über den Netzwerkverbindungsabschnitt NVA übertragenen Daten ermittelt. Die Ermittlung erfolgt jeweils durch die erste Kommunikations-Vorrichtung 20 und die zweite Kommunikations-Vorrichtung 30. Der Netzwerkverbindungsabschnitt NVA ist hierbei beispielsweise drahtgebunden oder optisch.

Außerdem erfolgt das Ermitteln der Laufzeiteigenschaft in dem ersten Schritt S101 vorzugsweise zu einem Zeitpunkt, wenn eine Verbindung zwischen der ersten Kommunikations-Vorrichtung 20 und der zweiten Kommunikations-Vorrichtung 30 aufgebaut wird.

In einem nachfolgenden Schritt S102 wird ein Geheimnis jeweils durch die erste Kommunikations-Vorrichtung 20 und die zweite Kommunikations-Vorrichtung 30 unter Verwendung der jeweiligen ermittelten Laufzeiteigenschaft abgeleitet.

Das jeweilige Geheimnis wird insbesondere mittels einer eine Anzahl von Ableitungsparametern verwendenden Schlüsselableitungsfunktion abgeleitet. Hierbei weist die Anzahl von Ableitungsparametern zumindest die jeweilige ermittelte Laufzeiteigenschaft auf.

Die Ableitungsparameter umfassen ferner vorzugsweise vorab konfigurierte Daten, wie beispielsweise feste Labels, Masterschlüssel oder weitere vorab konfigurierte Ableitungsinformationen.

Zusätzlich können die Ableitungsparameter dynamische Daten, wie beispielsweise Geräteadressen, Nonces oder Checksummen von über den Netzwerkverbindungsabschnitt NVA ausgetauschten Nachrichten, aufweisen.

In einem anderen Fall wird das jeweilige Geheimnis vorzugsweise durch die erste und die zweite Kommunikations-Vorrichtung 20, 30 mittels einer eine Anzahl von Schlüsselgenerierungsparametern verwendenden Schlüsselgenerierungsfunktion generiert. Dabei weisen die Anzahl von Schlüsselgenerierungsparametern zumindest die jeweilige ermittelte Laufzeiteigenschaft auf.

Beispielsweise ist zwischen der ersten und der zweiten Kommunikations-Vorrichtung 20, 30 eine Mehrzahl N von redundanten Netzwerkverbindungsabschnitten, mit N ≥ 2, angeordnet.

Dabei wird vorzugsweise für jeden aus der Mehrzahl N von redundanten Netzwerkverbindungsabschnitten eine Laufzeiteigenschaft von zwischen der ersten und der zweiten Kommunikations-Vorrichtung 20, 30 über den jeweiligen redundanten Netzwerkverbindungsabschnitt übertragenen Daten ermittelt.

Insbesondere ist es möglich, für jeden aus der Mehrzahl N von redundanten Netzwerkverbindungsabschnitten, mehrere Laufzeiteigenschaften von zwischen der ersten und der zweiten Kommunikations-Vorrichtung 20, 30 über den jeweiligen redundanten Netzwerkverbindungsabschnitt übertragenen Daten zu ermitteln.

Diese Ermittlung erfolgt beispielsweise jeweils durch die erste und die zweite Kommunikations-Vorrichtung 20, 30. Außerdem wird die jeweilige ermittelte Laufzeiteigenschaft oder werden die jeweiligen ermittelten Laufzeiteigenschaften als Teil der Ableitungsparameter in der Schlüsselableitungsfunktion verwendet.

In einem letzten Schritt S103 wird eine mittels des abgeleiteten Geheimnisses geschützte Nachricht zwischen der ersten und der zweiten Kommunikations-Vorrichtung 20, 30 übertragen.

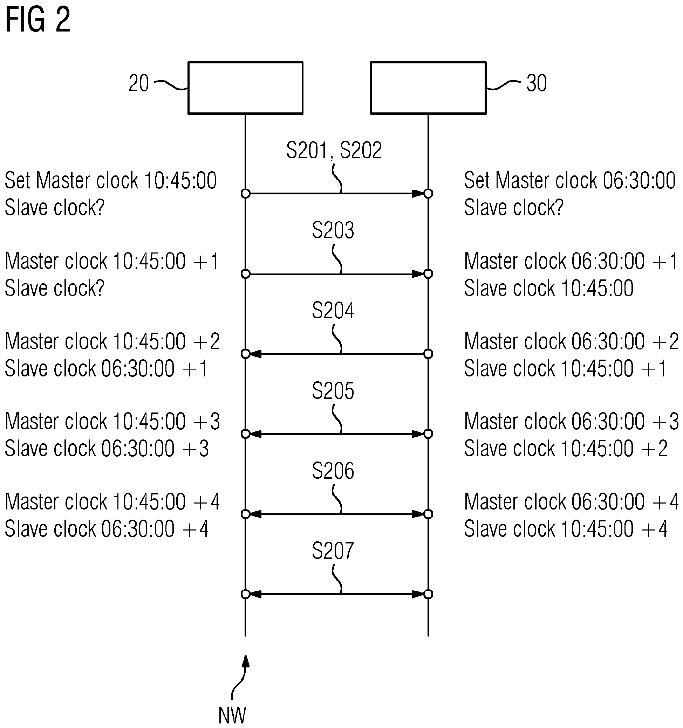

Fig. 2 zeigt ein schematisches Ablaufdiagramm eines zweiten Ausführungsbeispiels eines Verfahrens zum Übertragen von Daten in einem Netzwerk NW. Das Netzwerk NW umfasst eine erste Kommunikations-Vorrichtung 20 sowie eine zweite Kommunikations-Vorrichtung 30, zwischen welchen teilweise geschützte Nachrichten übertragen werden.

In dem Ablaufdiagramm in Fig. 2 ist die jeweilige ermittelte Laufzeiteigenschaft insbesondere eine Latenz.

Das erste Ausführungsbeispiel in Fig. 2 umfasst die Verfahrensschritte S201 bis S207. In den nachfolgenden Verfahrensschritten S201 bis S207 sind vorzugsweise einerseits der Synchronisierungsvorgang mittels des Zeitsynchronisationsprotokolls PTP als auch das anschließende Übertragen von geschützten Nachrichten beschrieben. Weiterhin wird hierbei zum besseren Verständnis angenommen, dass die Zeit mit jedem dargestelltem Nachrichtenaustausch um eine Sekunde fortschreitet.

Dies ist beispielsweise in jedem Schritt durch die Sekundenwerte +1, +2, +3 und +4 bei der ersten und der zweiten Kommunikations-Vorrichtung 20, 30 in Fig. 2 dargestellt.

In einem ersten Schritt S201 startet die erste Kommunikations-Vorrichtung 20 einen Verbindungsaufbau zu der zweiten Kommunikations-Vorrichtung 30.

In dem Schritt S202 wählen die erste und die zweite Kommunikations-Vorrichtung 20, 30 jeweils einen zufälligen Startwert für ihre Master Clock. Die erste Kommunikations-Vorrichtung 20 wählt den Zeitpunkt 10:45:00, während die zweite Kommunikations-Vorrichtung 30 den Zeitpunkt 06:30:00 auswählt. Bei der Master Clock handelt es sich insbesondere um eine erste Zeitinformation der ersten und der zweiten Kommunikations-Vorrichtung 20, 30, während es sich bei der Slave Clock vorzugsweise um eine zweite Zeitinformation der ersten und der zweiten Kommunikations-Vorrichtung 20, 30 handelt.

In dem Schritt S203 überträgt die erste Kommunikations-Vorrichtung 20 ihren Master Clock zu der zweiten Kommunikations-Vorrichtung 30. Die Master Clock der erste Kommunikations-Vorrichtung 20 wird nun die Slave Clock der zweiten Kommunikations-Vorrichtung 30.

In dem Schritt S204 überträgt die zweite Kommunikations-Vorrichtung 30 ihren Master Clock zu der ersten Kommunikations-Vorrichtung 20. Hierbei wird die Master Clock der zweiten Kommunikations-Vorrichtung 30 nun die Slave Clock der ersten Kommunikations-Vorrichtung 20.

In dem Schritt S205 synchronisiert die erste Kommunikations-Vorrichtung 20 ihren Slave Clock mit der Master Clock von der zweiten Kommunikations-Vorrichtung 30, indem die Latenz zwischen der ersten und der zweiten Kommunikations-Vorrichtung 20, 30 über den Netzwerkverbindungsabschnitt NVA ermittelt wird.

In dem Schritt S206 synchronisiert die zweite Kommunikations-Vorrichtung 30 ihren Slave Clock mit der Master Clock von der ersten Kommunikations-Vorrichtung 20, indem die Latenz zwischen der ersten und der zweiten Kommunikations-Vorrichtung 20, 30 über dem Netzwerkverbindungsabschnitt NVA ermittelt wird.

Anschließend sind die erste und die zweite Kommunikations-Vorrichtung 20, 30 hinsichtlich ihrer Master und Slave Clocks synchronisiert. Somit kann, basierend auf der ermittelten synchronen ersten und zweiten Zeitinformation oder weiteren Ableitungsparametern, jeweils das Geheimnis mittels der Schlüsselableitung abgeleitet werden.

Ferner können als weitere Ableitungsparameter eine Konkatenation der ersten und zweiten Zeitinformation oder eine Differenz der ersten und zweiten Zeitinformation in der Schlüsselableitungsfunktion verwendet werden.

Weiterhin können bestimmte Daten der ersten und zweiten Zeitinformation oder Schlüsselbits, die in Abhängigkeit der ersten und zweiten Zeitinformation generiert werden, als die weiteren Ableitungsparameter in der Schlüsselableitungsfunktion verwendet werden.

Im Anschluss ist es in dem Schritt S207 möglich, geschützte Nachrichten zwischen der ersten und der zweiten Kommunikations-Vorrichtung 20, 30 über zumindest den Netzwerkverbindungsabschnitt NVA zu übertragen.

Vorzugsweise wird die Latenz beim Übertragen einer Nachricht zwischen der ersten und der zweiten Kommunikations-Vorrichtung 20, 30 unter Verwendung einer Einrichtung manipuliert. Die Einrichtung ist beispielsweise in der ersten und/oder zweiten Kommunikations-Vorrichtung 20, 30 angeordnet.

Insbesondere wird beim Ermitteln der Latenz jeweils durch die erste und die zweite Kommunikations-Vorrichtung 20, 30 die Latenz des Netzwerkverbindungsabschnitts NVA zwischen der ersten und der zweiten Kommunikations-Vorrichtung 20, 30 mittels eines Generators erzeugt. Die Latenz des Netzwerkverbindungsabschnitts NVA ist beispielsweise spezifisch für den Netzwerkverbindungsabschnitt NVA.

Fig. 3 zeigt ein schematisches Blockdiagramm eines Ausführungsbeispiel eines Systems 100 zum Übertragen von Daten in einem Netzwerk NW. Das System 100 umfasst eine Mehrzahl M von Kommunikations-Vorrichtungen 20, 30, mit M ≥ 2, wobei die Mehrzahl M eine erste Kommunikations-Vorrichtung 20 und eine zweite Kommunikations-Vorrichtung 30 umfasst, welche über einen Netzwerkverbindungsabschnitt NVA zum Übertragen von Daten verbunden sind.

Die erste Kommunikations-Vorrichtung 20 und die zweite Kommunikations-Vorrichtung 30 weisen jeweils insbesondere eine Ermittlungs-Einheit 11, eine Ableitungs-Einheit 12 und eine Übertragungs-Einheit 13 auf.

Die Ermittlungs-Einheit ist vorzugsweise dazu eingerichtet, eine Laufzeiteigenschaft von zwischen der ersten Kommunikations-Vorrichtung 20 und der zweiten Kommunikations-Vorrichtung 30 über den Netzwerkverbindungsabschnitt NVA übertragenen Daten zu ermitteln.

Insbesondere ist die Ableitungs-Einheit 12 dazu eingerichtet, ein Geheimnis unter Verwendung der jeweiligen ermittelten Laufzeiteigenschaft abzuleiten.

Die Übertragungs-Einheit 13 ist dazu eingerichtet, eine mittels des abgeleiteten Geheimnisses geschützte Nachricht zwischen der ersten und der zweiten Kommunikations-Vorrichtung 20, 30 zu übertragen.

Obwohl die vorliegende Erfindung anhand von Ausführungsbeispielen beschrieben wurde, ist sie vielfältig modifizierbar.

## Patentansprüche

1. Verfahren zum Übertragen von Daten in einem Netzwerk (NW) umfassend eine Mehrzahl M von Kommunikations-Vorrichtungen (20, 30), mit M ≥ 2, wobei die Mehrzahl M eine erste Kommunikations-Vorrichtung (20) und eine zweite Kommunikations-Vorrichtung (30) umfasst, welche über einen Netzwerkverbindungsabschnitt (NVA) zum Übertragen von Daten verbunden sind, mit:
a) Ermitteln (S101) einer Laufzeiteigenschaft von zwischen der ersten Kommunikations-Vorrichtung (20) und der zweiten Kommunikations-Vorrichtung (30) über den Netzwerkverbindungsabschnitt (NVA) übertragenen Daten jeweils durch die erste Kommunikations-Vorrichtung (20) und die zweite Kommunikations-Vorrichtung (30), wobei der Netzwerkverbindungsabschnitt (NVA) als ein drahtgebundener Netzwerkverbindungsabschnitt (NVA) oder als ein optischer Netzwerkverbindungsabschnitt (NVA) ausgebildet ist,
b) Ableiten (S102) eines Geheimnisses jeweils durch die erste Kommunikations-Vorrichtung (20) und die zweite Kommunikations-Vorrichtung (30) unter Verwendung der jeweiligen ermittelten Laufzeiteigenschaft, und
c) Übertragen (S103) einer mittels des abgeleiteten Geheimnisses geschützten Nachricht zwischen der ersten und der zweiten Kommunikations-Vorrichtung (20, 30).

2. Verfahren nach Anspruch 1,
**dadurch gekennzeichnet,**
**dass** das Ermitteln der Laufzeiteigenschaft zu einem Zeitpunkt eines Verbindungsaufbaus zwischen der ersten Kommunikations-Vorrichtung (20) und der zweiten Kommunikations-Vorrichtung (30) erfolgt.

3. Verfahren nach Anspruch 1 oder 2,
**dadurch gekennzeichnet,**
**dass** in dem Schritt b) das Geheimnis jeweils durch die erste Kommunikations-Vorrichtung (20) und die zweite Kommunikations-Vorrichtung (30) mittels einer eine Anzahl von Ableitungsparametern verwendenden Schlüsselableitungsfunktion abgeleitet wird, wobei die Ableitungsparameter zumindest die jeweilige ermittelte Laufzeiteigenschaft aufweisen.

4. Verfahren nach Anspruch 3,
**dadurch gekennzeichnet,**
**dass** die Ableitungsparameter ferner jeweils vorab konfigurierte Daten und/oder jeweils dynamische Daten umfassen.

5. Verfahren nach Anspruch 3 oder 4,
**dadurch gekennzeichnet,**
**dass** die jeweilige ermittelte Laufzeiteigenschaft eine erste Zeitinformation und eine zweite Zeitinformation umfasst, wobei
eine Konkatenation der ersten und zweiten Zeitinformation, eine Differenz der ersten und zweiten Zeitinformation, bestimmte Daten der ersten und zweiten Zeitinformation oder Schlüsselbits, die in Abhängigkeit der ersten und zweiten Zeitinformation generiert werden, als die Ableitungsparameter in der Schlüsselableitungsfunktion verwendet werden.

6. Verfahren nach Anspruch 4 oder 5,
**dadurch gekennzeichnet,**
**dass** die vorab konfigurierten Daten als feste Labels, als Masterschlüssel und/oder als weitere vorab konfigurierte Ableitungsinformationen ausgebildet sind.

7. Verfahren nach einem der Ansprüche 4 bis 6,
**dadurch gekennzeichnet,**
**dass** die dynamischen Daten als Geräteadressen, als Nonces und/oder als Checksummen von über den Netzwerkverbindungsabschnitt (NVA) ausgetauschten Nachrichten ausgebildet sind.

8. Verfahren nach einem der Ansprüche 1 bis 7,
**dadurch gekennzeichnet,**
**dass** in dem Schritt b) das Geheimnis jeweils durch die erste Kommunikations-Vorrichtung (20) und die zweite Kommunikations-Vorrichtung (30) mittels einer eine Anzahl von Schlüsselgenerierungsparametern verwendenden Schlüsselgenerierungsfunktion generiert wird, wobei die Schlüsselgenerierungsparameter zumindest die jeweilige ermittelte Laufzeiteigenschaft aufweisen.

9. Verfahren nach einem der Ansprüche 3 bis 8,
**dadurch gekennzeichnet,**
**dass** für jeden aus einer Mehrzahl N von redundanten Netzwerkverbindungsabschnitten zwischen der ersten und der zweiten Kommunikations-Vorrichtung (20, 30) eine Laufzeiteigenschaft von zwischen der ersten und der zweiten Kommunikations-Vorrichtung (20, 30) über den jeweiligen redundanten Netzwerkverbindungsabschnitt aus der Mehrzahl N von redundanten Netzwerkabschnitten übertragenen Daten durch die erste und die zweite Kommunikations-Vorrichtung (20, 30) ermittelt wird, mit N ≥ 2, wobei die jeweilige ermittelte Laufzeiteigenschaft als Teil der Ableitungsparameter in der Schlüsselableitungsfunktion verwendet wird, und/oder
**dass** für jeden aus der Mehrzahl N von redundanten Netzwerkverbindungsabschnitten zwischen der ersten und der zweiten Kommunikations-Vorrichtung (20, 30) mehrere Laufzeiteigenschaften von zwischen der ersten und der zweiten Kommunikations-Vorrichtung (20, 30) über den jeweiligen redundanten Netzwerkverbindungsabschnitt aus der Mehrzahl N von redundanten Netzwerkabschnitten übertragenen Daten durch die erste und die zweite Kommunikations-Vorrichtung (20, 30) ermittelt werden, wobei die jeweiligen ermittelten mehreren Laufzeiteigenschaften als Teil der Ableitungsparameter in der Schlüsselableitungsfunktion verwendet werden.

10. Verfahren nach einem der Ansprüche 1 bis 9,
**dadurch gekennzeichnet,**
**dass** die jeweilige ermittelte Laufzeiteigenschaft als Latenz ausgebildet ist.

11. Verfahren nach Anspruch 10,
**dadurch gekennzeichnet,**
**dass** die Latenz beim Übertragen einer Nachricht zwischen der ersten und der zweiten Kommunikations-Vorrichtung (20, 30) unter Verwendung einer in der ersten und/oder zweiten Kommunikations-Vorrichtung (20, 30) angeordneten Einrichtung manipuliert wird.

12. Verfahren nach Anspruch 10 oder 11,
**dadurch gekennzeichnet,**
**dass** beim Ermitteln der Latenz jeweils durch die erste und die zweite Kommunikations-Vorrichtung (20, 30) die Latenz des Netzwerkverbindungsabschnitts (NVA) zwischen der ersten und der zweiten Kommunikations-Vorrichtung (20, 30) mittels eines Generators spezifisch für den Netzwerkverbindungsabschnitt (NVA) erzeugt wird.

13. Computerprogrammprodukt, welches auf einer programmgesteuerten Einrichtung die Durchführung des Verfahrens nach einem der Ansprüche 1 bis 12 veranlasst.

14. System (100) zum Übertragen von Daten in einem Netzwerk (NW), umfassend eine Mehrzahl M von Kommunikations-Vorrichtungen (20, 30), mit M ≥ 2, wobei die Mehrzahl M eine erste Kommunikations-Vorrichtung (20) und eine zweite Kommunikations-Vorrichtung (30) umfasst, welche über einen Netzwerkverbindungsabschnitt (NVA) zum Übertragen von Daten verbunden sind, wobei die erste Kommunikations-Vorrichtung (20) und die zweite Kommunikations-Vorrichtung (30) jeweils umfassen:
eine Ermittlungs-Einheit (11) zum Ermitteln einer Laufzeiteigenschaft von zwischen der ersten Kommunikations-Vorrichtung (20) und der zweiten Kommunikations-Vorrichtung (30) über den Netzwerkverbindungsabschnitt (NVA) übertragenen Daten, wobei der Netzwerkverbindungsabschnitt (NVA) als ein drahtgebundener Netzwerkverbindungsabschnitt (NVA) oder als ein optischer Netzwerkverbindungsabschnitt (NVA) ausgebildet ist,
eine Ableitungs-Einheit (12) zum Ableiten eines Geheimnisses unter Verwendung der jeweiligen ermittelten Laufzeiteigenschaft, und
eine Übertragungs-Einheit (13) zum Übertragen einer mittels des abgeleiteten Geheimnisses geschützten Nachricht zwischen der ersten und der zweiten Kommunikations-Vorrichtung (20, 30).

## Claims

1. Method for transmitting data in a network (NW) comprising a plurality M of communication apparatuses (20, 30), with M ≥ 2, wherein the plurality M comprises a first communication apparatus (20) and a second communication apparatus (30), which are connected via a network connection section (NVA) for the purpose of transmitting data, comprising:
a) the first communication apparatus (20) and the second communication apparatus (30) each ascertaining (S101) a time-of-flight property of data transmitted between the first communication apparatus (20) and the second communication apparatus (30) via the network connection section (NVA), wherein the network connection section (NVA) is in the form of a wired network connection section (NVA) or in the form of an optical network connection section (NVA),
b) the first communication apparatus (20) and the second communication apparatus (30) each deriving (S102) a secret by using the respective ascertained time-of-flight property, and
c) transmitting (S103) a message protected by means of the derived secret between the first and the second communication apparatus (20, 30).

2. Method according to Claim 1,
**characterized**
**in that** the time-of-flight property is ascertained at a time of a connection setup between the first communication apparatus (20) and the second communication apparatus (30).

3. Method according to Claim 1 or 2,
**characterized**
**in that** step b) involves the secret being derived by both the first communication apparatus (20) and the second communication apparatus (30) by means of a key derivation function that uses a number of derivation parameters, the derivation parameters comprising at least the respective ascertained time-of-flight property.

4. Method according to Claim 3,
**characterized**
**in that** the derivation parameters further comprise respective previously configured data and/or respective dynamic data.

5. Method according to Claim 3 or 4,
**characterized**
**in that** the respective ascertained time-of-flight property comprises a first piece of time information and a second piece of time information, wherein
a concatenation of the first and second time information, a difference between the first and second time information, specific data of the first and second time information or key bits generated on the basis of the first and second time information are used as the derivation parameters in the key derivation function.

6. Method according to Claim 4 or 5,
**characterized**
**in that** the previously configured data are in the form of fixed labels, in the form of master keys and/or in the form of other previously configured derivation information.

7. Method according to one of Claims 4 to 6,
**characterized**
**in that** the dynamic data are in the form of device addresses, in the form of nonces and/or in the form of checksums of messages exchanged via the network connection section (NVA).

8. Method according to one of Claims 1 to 7,
**characterized**
**in that** step b) involves the secret being generated by both the first communication apparatus (20) and the second communication apparatus (30) by means of a key generation function that uses a number of key generation parameters, the key generation parameters comprising at least the respective ascertained time-of-flight property.

9. Method according to one of Claims 3 to 8,
**characterized**
**in that** a time-of-flight property of data transmitted between the first and the second communication apparatus (20, 30) via the respective redundant network connection section from the plurality N of redundant network sections is ascertained by the first and the second communication apparatus (20, 30) for each of a plurality N of redundant network connection sections between the first and the second communication apparatus (20, 30), with N ≥ 2, wherein the respective ascertained time-of-flight property is used as part of the derivation parameters in the key derivation function, and/or
**in that** multiple time-of-flight properties of data transmitted between the first and the second communication apparatus (20, 30) via the respective redundant network connection section from the plurality N of redundant network sections are ascertained by the first and the second communication apparatus (20, 30) for each of the plurality N of redundant network connection sections between the first and the second communication apparatus (20, 30), wherein the respective ascertained multiple time-of-flight properties are used as part of the derivation parameters in the key derivation function.

10. Method according to one of Claims 1 to 9,
**characterized**
**in that** the respective ascertained time-of-flight property is in the form of a latency.

11. Method according to Claim 10,
**characterized**
**in that** the latency for the transmission of a message between the first and the second communication apparatus (20, 30) is manipulated by using a device arranged in the first and/or second communication apparatus (20, 30).

12. Method according to Claim 10 or 11,
**characterized**
**in that** the ascertainment of the latency involves both the first and the second communication apparatus (20, 30) generating the latency of the network connection section (NVA) between the first and the second communication apparatus (20, 30) by means of a generator specifically for the network connection section (NVA).

13. Computer program product that instigates the performance of the method according to one of Claims 1 to 12 on a program-controlled device.

14. System (100) for transmitting data in a network (NW), comprising a plurality M of communication apparatuses (20, 30), with M ≥ 2, wherein the plurality M comprises a first communication apparatus (20) and a second communication apparatus (30), which are connected via a network connection section (NVA) for the purpose of transmitting data, wherein the first communication apparatus (20) and the second communication apparatus (30) each comprise:
an ascertainment unit (11) for ascertaining a time-of-flight property of data transmitted between the first communication apparatus (20) and the second communication apparatus (30) via the network connection section (NVA), wherein the network connection section (NVA) is in the form of a wired network connection section (NVA) or in the form of an optical network connection section (NVA),
a derivation unit (12) for deriving a secret by using the respective ascertained time-of-flight property, and
a transmission unit (13) for transmitting a message protected by means of the derived secret between the first and the second communication apparatus (20, 30).

## Revendications

1. Procédé de transmission de données dans un réseau (NW) comprenant une pluralité M de dispositifs de communication (20, 30) avec M ≥ 2, dans lequel la pluralité M comprend un premier dispositif de communication (20) et un second dispositif de communication (30), qui sont connectés via une section de connexion de réseau (NVA) afin de transmettre des données, comprenant les étapes consistant à :
a) déterminer (S101) une caractéristique de temps de propagation de données transmises entre le premier dispositif de communication (20) et le second dispositif de communication (30) via la section de connexion de réseau (NVA) respectivement par le premier dispositif de communication (20) et le second dispositif de communication (30), dans lequel la section de connexion de réseau (NVA) est réalisée sous la forme d'une section de connexion de réseau (NVA) câblée ou sous la forme d'une section de connexion de réseau (NVA) optique,
b) dériver (S102) un secret respectivement par l'intermédiaire du premier dispositif de communication (20) et du second dispositif de communication (30) en utilisant la caractéristique de propagation déterminée respective, et
c) transmettre (S103) un message protégé au moyen du secret dérivé entre les premier et second dispositifs de communication (20, 30).

2. Procédé selon la revendication 1,
**caractérisé en ce que** :
la détermination de la caractéristique de temps de propagation a lieu à un instant d'un établissement de connexion entre le premier dispositif de communication (20) et le second dispositif de communication (30).

3. Procédé selon la revendication 1 ou 2,
**caractérisé en ce que** :
dans l'étape b), le secret est dérivé respectivement par le premier dispositif de communication (20) et le second dispositif de communication (30) au moyen d'une fonction de dérivation de clé utilisant un certain nombre de paramètres de dérivation, dans lequel les paramètres de dérivation présentent au moins la caractéristique de temps de propagation déterminée respective.

4. Procédé selon la revendication 3,
**caractérisé en ce que** :
les paramètres de dérivation comprennent en outre des données préconfigurées respectives et/ou des données dynamiques respectives.

5. Procédé selon la revendication 3 ou 4,
**caractérisé en ce que** :
la caractéristique de temps de propagation déterminée respective comprend une première information de temps et une seconde information de temps, dans lequel
une concaténation des première et seconde informations de temps, une différence des première et seconde informations de temps, des données déterminées des première et seconde informations de temps ou des bits de clé qui sont générés en fonction des première et seconde informations de temps, sont utilisés en tant que paramètres de dérivation dans la fonction de dérivation de clé.

6. Procédé selon la revendication 4 ou 5,
**caractérisé en ce que** :
les données préconfigurées sont réalisées sous la forme d'étiquettes fixes, de clé maîtresse et/ou d'autres informations de dérivation préconfigurées.

7. Procédé selon l'une quelconque des revendications 4 à 6,
**caractérisé en ce que** :
les données dynamiques sont réalisées sous la forme d'adresses d'appareil, de nombres aléatoires et/ou de sommes de contrôle de messages échangés via la section de connexion de réseau (NVA).

8. Procédé selon l'une quelconque des revendications 1 à 7,
**caractérisé en ce que** :
dans l'étape b), le secret est dérivé respectivement par le premier dispositif de communication (20) et le second dispositif de communication (30) au moyen d'une fonction de génération de clé utilisant un certain nombre de paramètres de génération de clé, dans lequel les paramètres de génération de clé présentent au moins la caractéristique de temps de propagation déterminée respective.

9. Procédé selon l'une quelconque des revendications 3 à 8,
**caractérisé en ce que** :
pour chacune d'une pluralité N de sections de connexion de réseau redondantes entre les premier et second dispositifs de communication (20, 30), une caractéristique de temps de propagation de données transmises entre les premier et second dispositifs de communication (20, 30) via la section de connexion de réseau redondante respective de la pluralité N de sections de réseau redondantes est déterminée par les premier et second dispositifs de communication (20, 30), avec N ≥ 2, dans lequel la caractéristique de temps de propagation déterminée respective est utilisée en tant que partie des paramètres de dérivation dans la fonction de dérivation de clé, et/ou
dans lequel, pour chacune de la pluralité N de sections de connexion de réseau redondantes entre les premier et second dispositifs de communication (20, 30), plusieurs caractéristiques de temps de propagation de données transmises entre les premier et second dispositifs de communication (20, 30) via la section de connexion de réseau redondante respective de la pluralité N de sections de réseau redondantes sont déterminées par les premier et second dispositifs de communication (20, 30), dans lequel les plusieurs caractéristiques de temps de propagation déterminées respectives sont utilisées en tant que partie des paramètres de dérivation dans la fonction de dérivation de clé.

10. Procédé selon l'une quelconque des revendications 1 à 9,
**caractérisé en ce que** :
la caractéristique de temps de propagation déterminée respective est réalisée sous la forme d'une latence.

11. Procédé selon la revendication 10,
**caractérisé en ce que** :
la latence est manipulée lors de la transmission d'un message entre les premier et second dispositifs de communication (20, 30) en utilisant un dispositif agencé dans le premier et/ou le second dispositif de communication (20, 30).

12. Procédé selon la revendication 10 ou 11,
**caractérisé en ce que** :
lors de la détermination de la latence respectivement par les premier et second dispositifs de communication (20, 30), la latence de la section de connexion de réseau (NVA) entre les premier et second dispositifs de communication (20, 30) est générée au moyen d'un générateur spécifique à la section de connexion de réseau (NVA).

13. Produit de programme informatique qui, sur un dispositif commandé par programme, amène la mise en œuvre du procédé selon l'une des revendications 1 à 12.

14. Système (100) permettant de transmettre des données dans un réseau (NW) comprenant une pluralité M de dispositifs de communication (20, 30), avec M ≥ 2, dans lequel la pluralité M comprend un premier dispositif de communication (20) et un second dispositif de communication (30) qui sont connectés via une section de connexion de réseau (NVA) afin de transmettre des données, dans lequel le premier dispositif de communication (20) et le second dispositif de communication (30) comprennent respectivement :
une unité de détermination (11) permettant de déterminer une caractéristique de temps de propagation de données transmises entre le premier dispositif de communication (20) et le second dispositif de communication (30)via la section de connexion de réseau (NVA), dans lequel la section de connexion de réseau (NVA) est réalisée sous la forme d'une section de connexion de réseau (NVA) câblée ou sous la forme d'une section de connexion de réseau (NVA) optique,
une unité de dérivation (12) permettant de dériver un secret en utilisant la caractéristique de temps de propagation déterminée respective, et
une unité de transmission (13) permettant de transmettre un message protégé au moyen du secret dérivé entre les premier et second dispositifs de communication (20, 30).
